# EUROPÄISCHE PATENTSCHRIFT

(11) **EP 1 906 101 B1**
(45) Veröffentlichungstag und Bekanntmachung des Hinweises auf die Patenterteilung: **13.08.2014**
(21) Anmeldenummer: 07114712.8
(22) Anmeldetag: 21.08.2007
(51) Int. Cl.: F28F 27/00, F24D 3/10, F28D 20/00, F24D 11/00

(54) **Speicheranordnung und Umladeverfahren für Wärmeenergie**
Storage assembly and reuse method for thermal energy
Agencement de stockage et procédé de transfert pour énergie calorifique

(30) Priorität: 13.09.2006 DE 102006042905
(43) Veröffentlichungstag der Anmeldung: 02.04.2008
(73) Patentinhaber: Forstner Speichertechnik GmbH, 6971 Hard (Vbg.) (AT)
(72) Erfinder: Eller, Franz Josef, 86825 Bad Wörishofen (DE)
(74) Vertreter: Fechner, Thomas

(56) Entgegenhaltungen:
- EP-A- 0 330 648
- WO-A-82/04370
- DE-A1- 2 558 510
- DE-A1- 4 212 749
- DE-A1- 19 704 986
- DE-A1- 19 706 506
- DE-U1- 29 813 784

## Beschreibung

Die Erfindung betrifft eine Speicheranordnung nach dem Oberbegriff des Anspruchs 1 und ein Umladeverfahren für Wärmeenergie nach Anspruch 12.

Bei bekannten Speicheranordnungen für flüssige Speichermedien, insbesondere Schichtspeicheranordnungen, wie sie beispielsweise in Heizungsanlagen Anwendung finden, sind oft mehrere Schichtspeicher zur Aufnahme eines flüssigen Speichermediums miteinander verbunden. Hierdurch können größere Speichervolumina bereitgestellt werden. Die bekannten Schichtspeicheranordnungen sind üblicherweise parallel oder in Reihe geschaltet. Bei parallel geschalteten Schichtspeicheranordnungen wird von einer Heizungsquelle kommendes heißes Speichermedium, z.B. heißes Wasser, gleichmäßig auf alle Schichtspeicher der Schichtspeicheranordnungen verteilt. Da dann alle Speicher im oberen Bereich die gleich hohe Temperatur aufweisen, sind die Wärmeübergangsflächen zwischen der heißen oberen Zone und der kalten unteren Zone relativ groß, so dass im Vergleich zu einem einzelnen großen Schichtspeicher mit entsprechendem Speichervolumen relativ große Verluste nutzbarer Wärmeenergie auftreten. Auch werden bei den parallel geschalteten Schichtspeicheranordnungen üblicherweise Schichtspeicher mit gleichen Volumina verwendet.

Bei in Reihe geschalteten Schichtspeicheranordnungen werden die einzelnen Schichtspeicher üblicherweise derart miteinander verbunden, dass der untere Bereich eines ersten Schichtspeichers mit dem oberen Bereich eines zweiten Schichtspeichers, der untere Bereich des zweiten Schichtspeichers mit dem oberen Bereich eines dritten Schichtspeichers usw. miteinander verbunden sind. Neues heißes Speichermedium wird stets dem ersten Speicher zugeführt, so dass jeweils Speichermedium aus dem kälteren unteren Bereich des ersten Speichers in den wärmeren oberen Bereich des zweiten Speichers umgeladen werden muss. Hierbei erfolgt stets eine Umschichtung des Speichermediums in sämtlichen Schichtspeichern über sämtliche Temperaturniveaus hinweg. Problematisch ist hierbei auch die Rückladung von Wärmeenergie, die von einem Verbraucher an die Speicher zurückgeführt wird. Ein Beispiel einer derartigen in Reihe geschalteten Schichtspeicheranordnung zeigt die DE 25 58 510 C2.

Auch die Druckschrift EP 0 330 648 A2, welche als nächstliegender Stand der Technik angesehen wird, zeigt eine Heizungsanordnung mit mindestens einer Heizvorrichtung für ein Trägermedium, z.B. einen durch Öl oder Gas betriebenen Heizungskessel, einer Wärmepumpe oder einen Feststoffbrenner, weiters mit einer Förderpumpe für das Trägermedium, mit einem Wärmetauscher, mit im Heizungskreis angeordneten Verbrauchern, wie Heizungsradiatoren, und mit mindestens einem Boiler für Brauchwasser, welcher mittels des Wärmetauschers aufheizbar ist, wobei sich einer der Leitungszweige des Wärmetauschers im Kreislauf der Heizvorrichtung befindet. Der andere Leitungszweig befindet sich im Kreislauf des Boilers, wobei dessen beiden Leitungen einerseits im oberen und andererseits im unteren Bereich des Boilers münden. Auch bei der dortigen Boileranordnung ist der untere Bereich des einen Boilers mit dem oberen Bereich des zweiten Boilers verbunden, so dass dort nur Speichermedium aus dem kälteren unteren Bereich des ersten Boilers in den wärmeren oberen Bereich des zweiten Boilers umgeladen werden kann. Eine energiesparende und bedarfsgerechte Umladung überschüssiger Energie zwischen den Boilern ist hier nicht möglich und auch nicht vorgesehen.

Nachteilig bei den bekannten Schichtspeicheranordnungen sind die großen Wärmeübergangsflächen, ein hoher Verrohrungsaufwand und große Energieverluste durch viele schlecht zu isolierende Speicheranschlüsse. Hierdurch bedingt können die einzelnen Schichtspeicher nicht weit voneinander entfernt aufgestellt werden.

Um einige dieser Nachteile zu überwinden, wurde in der DE 298 13 784 U1 ein Warmwasserspeicher mit einem Zentralspeicher und an diesen angeschlossenen Zusatzspeichern vorgeschlagen. Die Zusatzspeicher sind in unmittelbarer Nähe und baulich an dem Zentralspeicher angeordnet und im unteren bzw. oberen Bereich mit diesem zum automatischen Austausch von Speichermedium miteinander verbunden. Im Zentralspeicher ist eine ein Heizmedium enthaltende Laderohrwendel in einem Mittelrohr angeordnet. Über die Laderohrwendel wird das Wasser im Zentralspeicher aufgeheizt und über das Mittelrohr in den Zentralspeicher eingeschichtet. Gleichzeitig wird automatisch das Wasser in den Zusatzspeichern so mit dem heißen Wasser im Zentralspeicher ausgetauscht, dass das Wasser im unteren Bereich der Zusatzspeicher die gleiche Temperatur hat wie das Wasser im unteren Bereich des Zentralspeichers. Nachteilig bei diesem Warmwasserspeicher sind die fehlende Steuerbarkeit des Energieaustauschs zwischen dem Zentral- und den Zusatzspeichern, wobei ständig das gesamte Speichervolumen umgewälzt wird. Auch benötigt dieser Warmwasserspeicher viel Platz, und die Zusatzspeicher müssen in unmittelbarer Nähe des Zentralspeichers angeordnet werden.

Aufgabe der vorliegenden Erfindung ist es deshalb, eine Speicheranordnung und ein Umladeverfahren für Wärmeenergie bereitzustellen, die eine energiesparende, bedarfsgerechte Umladung von Überschussenergie zwischen einzelnen Speichern ermöglichen.

Diese Aufgabe wird durch eine Speicheranordnung mit den Merkmalen des Anspruchs 1 und ein Umladeverfahren für Wärmeenergie mit den Merkmalen des Anspruchs 12 gelöst. Vorteilhafte Ausgestaltungen und zweckmäßige Weiterbildungen der Erfindung sind in den Unteransprüchen angegeben.

Eine eingangs genannte Speicheranordnung zum Speichern von thermischer, in einem fluiden Speichermedium gebundener Energie, weist erfindungsgemäß in wenigstens einer der Leitungen eine in entgegengesetzte Förderrichtungen steuerbare Fördervorrichtung auf, um das Speichermedium von einem Speicherbereich des ersten Speichers in den korrespondierenden Speicherbereich des zweiten Speichers und umgekehrt fördern zu können. Bei dem erfindungsgemäßen Verfahren zum Umladen von in einem fluiden Speichermedium gebundener Wärmeenergie wird Speichermedium aus einem Speicherbereich in einem Energieniveau eines ersten Speichers in einen korrespondierenden Speicherbereich mindestens eines zweiten Speichers oder in umgekehrter Richtung aktiv gefördert, bis die Temperatur des Speichermediums in dem oder einem anderen Speicherbereich des ersten Speichers einen vorgegebene Sollwert erreicht.

Die erfindungsgemäße Speicheranordnung und das Umladeverfahren ermöglichen eine gezielte und bedarfsgerechte Umladung von in dem Speichermedium gebundener Wärmeenergie aus dem einem Speicher in den anderen Speicher. Es muss nur soviel Speichermedium umgeladen werden, dass die überschüssige Wärmeenergie in den anderen Speicher gelangt. Dies wird aufgrund der zielgerichteten Umladung und Einschichtung des die überschüssige Wärmeenergie enthaltenden Speichermediums in den korrespondierenden Speicherbereich des anderen Speichers erreicht, so dass nur relativ kleine Volumina umgeladen werden müssen. Deshalb benötigen die Speicher geringere Volumina, da in einem Speicher benötigte Wärmeenergie schnell aus dem anderen Speicher geladen werden kann.

Auch können die Speicher unterschiedliche Volumina aufweisen. Da lediglich zwei Verbindungsleitungen benötigt werden, ist es leicht möglich, die Speicher auch voneinander entfernt, z.B. in auf mehrere Gebäude verteilt, aufzustellen, ohne beim Umladen von Überschussenergie viel Wärmeenergie zu verlieren.

In einer vorteilhaften Ausführung sind in den Speicherbereichen unterschiedlicher Energieniveaus Temperaturfühler vorgesehen, wodurch die Fördervorrichtung einfach temperaturabhängig angesteuert werden kann.

Wird die Fördervorrichtung durch zwei in entgegengesetzte Förderrichtungen arbeitende und unabhängig voneinander ansteuerbare Pumpen gebildet, so wird nur ein minimaler Aufwand für die Verrohrung der Speicher und die Ansteuerung der Fördervorrichtung benötigt. Wird die Fördervorrichtung durch eine Anordnung aus nur einer Pumpe und zwei Umschaltventilen gebildet, so wird nur eine Pumpe benötigt.

Bei einer weiteren Ausführung der Erfindung ermöglichen Leitungsabzweige, die die zweite Leitung mit dritten Speicherbereichen in einem mittleren Energieniveau der Speicher verbinden, wobei in der zweiten Leitung zwischen den zweiten Speicherbereichen und den Leitungsabzweigen sowie in den Leitungsabzweigen Einweg-Steuermittel, insbesondere Rückschlagventile, vorgesehen sind, die den Transport des Speichermediums jeweils nur in einer Flussrichtung gestatten, das bedarfsgerechte und zielgerichtete Ent- bzw. Beladen der unterschiedlichen zweiten und dritten Speicherbereiche.

Sind Einschichtvorrichtungen, insbesondere Schichtlanzen, in den Speichern vorgesehen, so kann das in die dritten Speicherbereiche mittleren Energieniveaus zugeführte Speichermedium besonders vorteilhaft in die seiner Temperatur entsprechende Speicherschicht eingeschichtet werden.

In einer weiteren vorteilhaften Ausführung ist an mindestens einem Speicher außerhalb des Speicherinneren eine als Wärmetauscher ausgebildete Wärmequelle vorgesehen, welche mit dem Speicherinneren zum Erwärmen des im Speicher befindlichen Speichermediums direkt verbundenen ist. Hierdurch kann bei Wärmeenergiebedarf auf einfache Weise schnell ein kleiner Anteil des Gesamtsvolumens des im Speicher befindlichen Speichermediums erhitzt werden, wodurch der Energiebedarf für die Aufheizung geringe gehalten wird.

Werden ein oder mehrere weitere Speicher mit dem ersten und dem zweiten Speicher so verbunden, dass die Speicherbereiche in einem tieferen Energieniveau untereinander und die Speicherbereiche in einem höheren Energieniveau untereinander verbunden sind, kann auf besonders vorteilhafte Weise Speichermedium mit überschüssiger Wärmeenergie bedarfsgerecht von einem oder mehreren Speichern auf einen oder mehrere anderer Speicher umgeladen werden, so dass nur geringe Verluste an nutzbarer Wärmeenergie entstehen.

Das erfindungsgemäße Verfahren zum Umladen von in einem flüssigen Speichermedium gebundener Wärmeenergie, die in einer Speicheranordnung gespeichert ist, ermöglicht besonders vorteilhaft ein temperaturabhängiges, schnelles und bedarfsgerechtes Umladen von Überschussenergie zwischen den Speichern.

In einer vorteilhaften Ausgestaltung des Verfahrens ist der vorgegebene Sollwert ein fest vorgegebener absoluter Temperatursollwert, so dass die Umladung in Abhängigkeit der Temperatur eines einzelnen Speichers erfolgen kann. In einer weiteren vorteilhaften Ausgestaltung wird der vorgegebene Sollwert aus einem fest vorgegebenen Temperaturdifferenzsollwert und der Temperatur in dem Speicherbereich des zweiten Speichers, der zu dem oder dem anderen Speicherbereich des ersten Speichers korrespondiert, ermittelt. Dies hat den Vorteil, dass die Temperaturniveaus in den beiden Speichern verglichen werden können, so dass eine bedarfsgerechte Umladung der Wärmeenergie in den Speichern erfolgen kann.

Um die relative langen Zeitkonstanten bei der Angleichung der Temperaturen während der Umladung zu berücksichtigen, kann der vorgegebene Sollwert vorteilhaft in einem vorgegebenen Toleranzbereich liegen.

Weitere Besonderheiten und Vorzüge der Erfindung ergeben sich aus der folgenden Beschreibung von bevorzugten Ausführungsbeispielen anhand der Zeichnungen. Es zeigen:
- Fig. 1: eine schematische Darstellung einer Speicheranordnung mit zwei Speichern gemäß einem ersten Ausführungsbeispiel der Erfindung;
- Fig. 2: eine schematische Darstellung zweier Umladevorgänge;
- Fig. 3: eine schematische Darstellung einer Speicheranordnung mit zwei Speichern gemäß einem zweiten Ausführungsbeispiel der Erfindung;
- Fig. 4: eine schematische Darstellung einer Speicheranordnung mit zwei Speichern im Verbund mit einer Heizungsanlage;
- Fig. 5: eine schematische Darstellung einer Speicheranordnung mit drei Speichern gemäß einem dritten Ausführungsbeispiel der Erfindung;

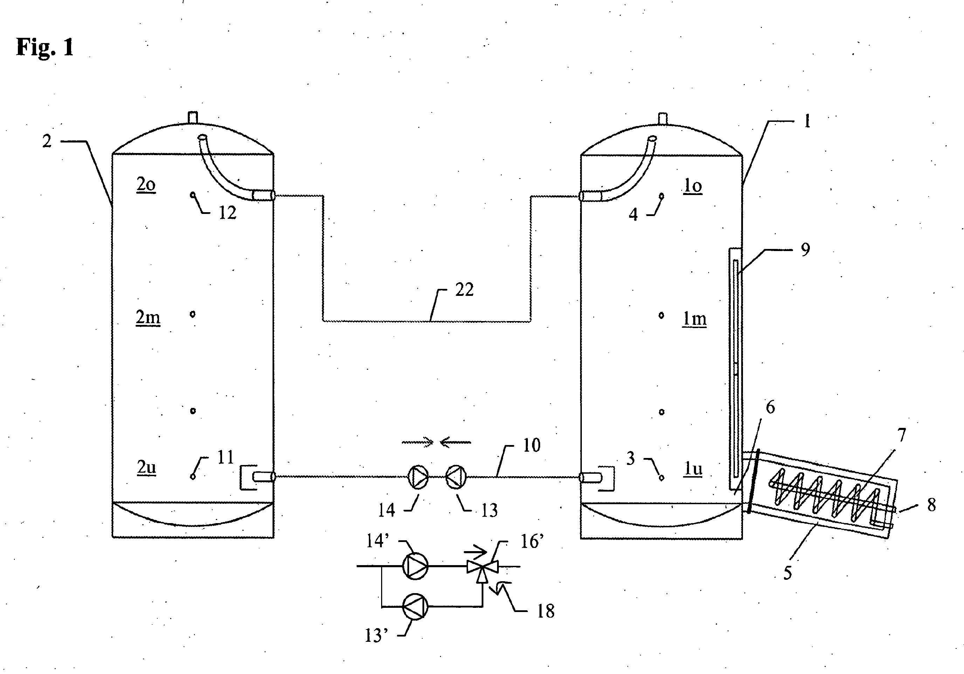

Fig. 1 zeigt eine schematische Darstellung einer erfindungsgemäßen Speicheranordnung. Die Speicheranordnung besteht aus einem in Fig. 1 rechten, ersten Speicher 1, der als an sich bekannter Schichtspeicher ausgebildet ist und zur Aufnahme von Wasser dient, welches als fluides Speichermedium Wärmeenergie speichert. In dem ersten Speicher 1 befindliches Wasser schichtet sich hierbei entsprechend seiner Temperatur in über die Höhe des ersten Speichers 1 verteilte Schichten, wobei sich das Wasser mit der tieferen bzw. niedrigsten Temperatur in einem ersten Speicherbereich 1u mit tiefer Temperatur bzw. tiefem Energieniveau im ersten Speicher 1 unten sammelt, während sich das Wasser mit der höheren bzw. höchsten Temperatur im ersten Speicher 1 in einem zweiten Speicherbereich 1o mit höherer Temperatur bzw. höherem Energieniveau oben sammelt. Zwischen diesen Speicherbereichen weist das Wasser eine mittlere Temperatur zwischen dem Minimalwert unten und dem Maximalwert oben auf. Die Temperaturen der unterschiedlichen Schichten wird mittels Wärmefühlern 3, 4 und weiteren, in den Zeichnungen erkennbaren, aber nicht bezeichneten Wärmefühlern gemessen, die über die Höhe des ersten Speichers 1 verteilt sind.

Dem im ersten Speicher 1 befindlichen Wasser kann Wärmeenergie über einen in Fig. 1 unten rechts am ersten Speicher 1 angebrachten und schräg nach unten verlaufender Wärmetauscher 5 zugeführt werden. Der Wärmetauscher 5 ist direkt am ersten Speicher 1 angeordnet und gegen die Außenumgebung wärmeisoliert. Das im ersten Speicher 1 unten befindliche Wasser niedriger Temperatur gelangt über einen Verbindungsanschluss 6 in den Wärmetauscher 5 und wird dort über ein in einer Rohrleitung 7 geführtes, extern aufgeheiztes Heizmedium 8 erhitzt. Das Heizmedium 8 kann ebenfalls Wasser sein und beispielsweise durch Sonnenkollektoren erhitzt werden. Da der Wärmetauscher 5 jeweils nur einen kleinen Anteil des Gesamtsvolumens des im ersten Speicher 1 befindlichen Speichermediums erwärmen muss, kann jener kleines Volumen aufweisen und kompakt ausgebildet sein. Um das im Wärmetauscher 5 erwärmte Wasser besser in die seiner Temperatur entsprechende Schicht des ersten Speichers 1 einschichten zu können, ist im ersten Speicher 1 eine Einschichtvorrichtungen in Form einer Schichtlanze 9 vorgesehen. Anstelle der Schichtlanzen 9 können auch andere, an sich bekannte Einschichtvorrichtungen vorgesehen werden, z. B. Prallplatten, U-förmige Schichtrohre, Einschichtbleche etc. Zusätzlich kann dem ersten Speicher 1 auch über in Fig. 1 nicht dargestellte Anschlüsse von außen heißes Wasser zugeführt werden.

Der erste Speicher 1 weist im unteren, ersten Speicherbereich 1u einen Anschluss zur Verbindung mit einer unteren, ersten Rohrleitung 10 auf, die an ihrem anderen Ende mit einem in Fig. 1 linken, zweiten Speicher 2 verbunden ist. Der zweite Speicher 2 ist wie der erste Speicher 1 als ein an sich bekannter Schichtspeicher mit über der Höhe verteilten Wärmefühlern 11, 12 und weiteren, in den Zeichnungen erkennbaren, aber nicht bezeichneten Wärmefühlern ausgebildet und unterscheidet sich vom ersten Speicher 1 nur dadurch, dass er keine zusätzliche Wärmequelle 5 und Schichtlanze 9 aufweist. Auch in den zweiten Speicher 2 kann über hier nicht dargestellte Anschlüsse erwärmtes Wasser von außen zugeführt werden. Ebenso weist der zweite Speicher 2 einen ersten Speicherbereich 2u mit tiefer Temperatur bzw. tiefem Energieniveau unten und einen zweiten Speicherbereich 2o mit höherer Temperatur bzw. höherem Energieniveau oben auf.

Um Wärmeenergie zwischen den beiden Speichern 1, 2 austauschen zu können, ist in der ersten Rohrleitung 10 eine aus zwei Pumpen 13, 14 gebildete Fördervorrichtung vorgesehen. Die Pumpen 13, 14 arbeiten in entgegengesetzte Förderrichtungen, wobei die in Fig. 1 rechte erste Pumpe 13 Wasser vom ersten Speicher 1 in den zweiten Speicher 2 fördern kann, während die linke zweite Pumpe 14 Wasser vom zweiten Speicher 2 in den ersten Speicher 1 fördern kann. Beide Pumpen 13, 14 werden durch eine zeichnerisch nicht dargestellte Steuerung in bekannter Weise angesteuert.

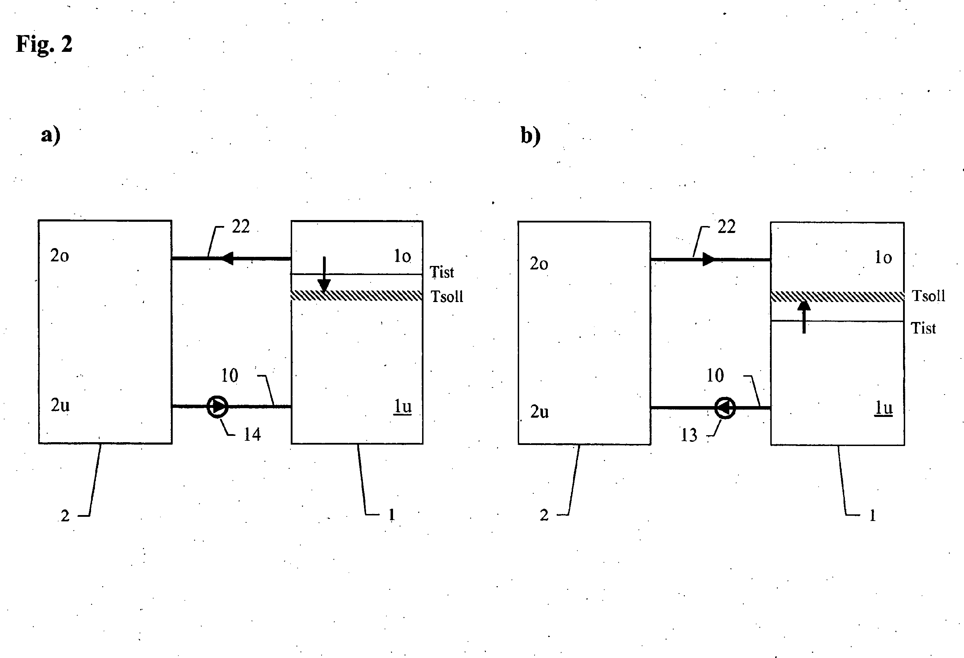

Anstelle von zwei Pumpen 13, 14 kann auch die in Fig. 1 unten dargestellte Kombination aus zwei Pumpen 13', 14' und einem Umschaltventil 16' verwendet werden, wobei zur Förderung von Wasser von rechts nach links in Fig. 1 bzw. 2 der T-Abzweig des Umschaltventils 16' entsprechend des gekrümmten Pfeils 18' geöffnet ist und die Pumpe 13' fördert. Zur Förderung in die entgegengesetzte Richtung von links nach rechts ist das Umschaltventil 18' in gerader Richtung geöffnet und die Pumpe 14' wird zum Fördern angesteuert.

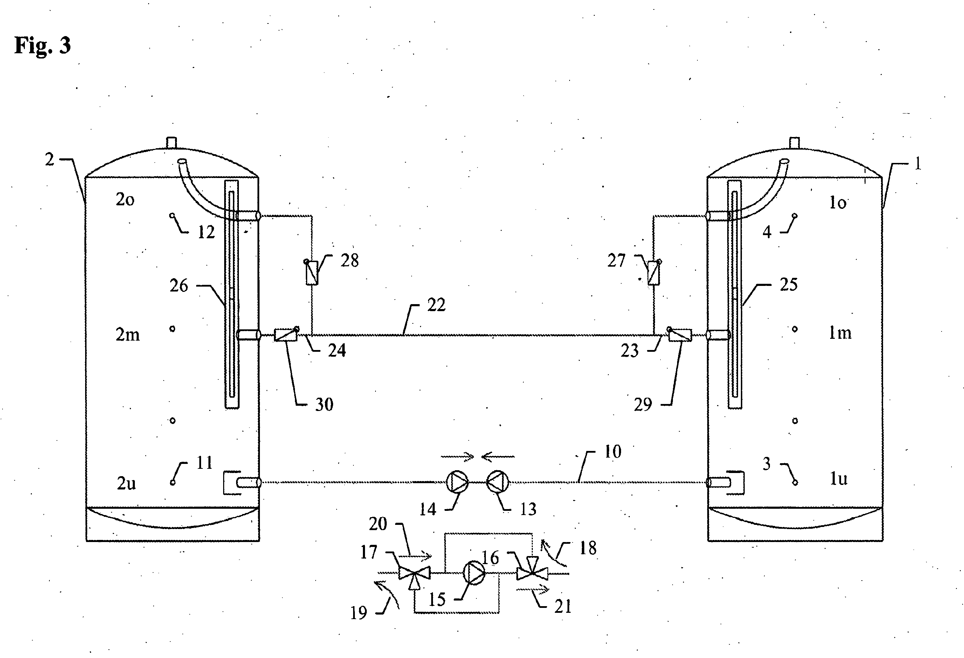

Eine weitere alternative Fördervorrichtung zeigt die in Fig. 3 unten dargestellte Kombination aus einer Pumpe 15 und zwei Umschaltventilen 16, 17, wobei zur Förderung von Wasser von rechts nach links in Fig. 1 bzw. 2 die T-Abzweige der Umschaltventile 16, 17 entsprechend der gekrümmten Pfeile 18, 19 geöffnet sind. Zur Förderung in die entgegengesetzte Richtung von links nach rechts sind die Umschaltventile 16, 17 entsprechend der geraden Pfeile 20, 21 geöffnet.

Die beiden Speicher 1, 2 sind über eine zweiten Rohrleitung 22 verbunden, wobei die Anschlüsse für die zweite Rohrleitung 22 in den Speichern 1, 2 ganz nach oben in den zweiten Speicherbereich 1o, 2o höherer Temperatur geführt sind, in denen sich das Wasser mit der höchsten Temperatur im jeweiligen Speicher 1, 2 befindet. Die sich entsprechenden bzw. zueinander korrespondierenden Speicherbereiche 1u, 2u tiefer Temperatur der beiden Speicher 1, 2 müssen nicht die gleiche Temperatur aufweisen. Gleiches gilt für die zweiten Speicherbereiche 1o, 2o höhere Temperatur. So kann beispielsweise der untere Speicherbereich 1u des ersten Speichers 1 eine Temperatur von 20°C und der obere Speicherbereich 1o eine Temperatur von 70°C aufweisen, während der untere Speicherbereich 2u des zweiten Speichers 2 eine Temperatur von 30°C und der obere Speicherbereich 2o eine Temperatur von 60°C aufweisen kann.

Um bei Bedarf Überschusswärmeenergie enthaltendes Wasser von einem Speicher in den anderen Speicher umladen zu können, werden die Pumpen 13, 14 wie nachfolgend beschrieben angesteuert. Besteht ein Wärmeüberschuss im ersten Speicher 1, so ist die Temperatur des Wassers am obersten Temperaturfühler 4 des ersten Speichers 1 höher als die des Wassers am entsprechenden obersten Temperaturfühler 12 des zweiten Speichers 2. Die beiden Temperaturwerte der Temperaturfühler 4, 12 werden in der Steuerung verglichen, wobei bei Überschreiten eines Sollwerts in Form eines Temperaturdifferenzsollwerts die Steuerung die zweite Pumpe 14 ansteuert. Die zweite Pumpe 14 fördert dann Wasser tiefer Temperatur aus dem unteren ersten Speicherbereich 2u des zweiten Speichers 2 in den entsprechenden Speicherbereich 1u des ersten Speichers 1. Hierdurch wird Wasser höherer Temperatur aus dem oberen, zweiten Speicherbereich 1o höheren Temperaturniveaus des ersten Speichers 1 verdrängt und gelangt über die zweite Rohrleitung 22 in den korrespondierenden oberen, zweiten Speicherbereich 2o des zweiten Speichers 2, wo es sich entsprechend seiner höheren Temperatur ganz oben einschichtet. Die zweite Pumpe 14 wird solange zum Fördern angesteuert, bis der Absolutwert der Differenz zwischen den an den beiden obersten Temperaturfühlern 4, 12 gemessene Temperaturen innerhalb eines vorgegebenen Toleranzbandes um den Temperaturdifferenzsollwert liegt, wodurch das relative träge Zeitverhalten der Temperaturangeleichung in den Speichermedien berücksichtig wird. Dann wird die zweite Pumpe 14 abgeschaltet, so dass der Umladevorgang beendet ist.

Soll im umgekehrten Fall in Wasser gebundene Überschusswärme vom zweiten Speicher 2 in den ersten Speicher 1 umgeladen werden, also wenn die Temperatur am obersten Temperaturfühler 12 des zweiten Speichers 2 höher ist als die des entsprechenden Temperaturfühlers 4 des ersten Speichers 1, dann wird die erste Pumpe 13 solange angesteuert, bis ausreichend heißes Wasser aus dem obersten, zweiten Speicherbereich 2o des zweiten Speichers 2 in den entsprechenden Speicherbereich 1o des ersten Speicher 1 umgeladen wurde und die an den obersten Temperaturfühlern 4, 12 gemessenen Temperaturen wieder innerhalb eines Toleranzbandes um den vorgegebenen Temperaturdifferenzsollwert liegen wie oben beschrieben.

Anhand der in Fig. 2 dargestellten Prinzipskizze wird dies nochmals verdeutlicht. Die in Fig. 2 dargestellte Speicheranordnung gleicht im wesentlichen der in der Fig. 1 gezeigten, so dass für gleiche Teile die gleichen Bezugszeichen verwendet werden. Aus Gründen der besseren Anschaulichkeit sind nur die für die nachfolgende Erläuterung wesentlichen Teile gezeichnet.

In Fig. 2 a) liegt im ersten Speicher 1 im Speicherbereich 1o höheren Energieniveaus die Ist-Temperatur Tist über dem vorgegebenen Toleranzbereich des Sollwerts der Temperatur Tsoll. Es ist also im Speicher 1 ein Überschuss an Wärmeenergie vorhanden. Die Steuerung erkennt dies anhand in Fig. 2 zeichnerisch nicht dargestellter Temperaturfühler und steuert hierauf die Pumpe 14 an, um Wasser aus dem unteren, ersten Speicherbereich 2u des Speichers 2 in den korrespondierenden unteren ersten Speicherbereich 1u des ersten Speichers 1 zu fördern. Hierdurch wird kälteres Wasser aus dem unteren Speicherbereich 1u des ersten Speichers 1 nach oben verdrängt, so dass das im oberen Speicherbereich 1o befindliche Wasser höherer Temperatur nach oben und über die Leitung 22 in den korrespondierenden oberen zweiten Speicherbereich 2o des zweiten Speichers 2 gefördert wird. Dies geschieht solange, bis sich die Ist-Temperatur Tist des im ersten Speicher 1 verbleibenden Wassers in dessen oberen Speicherbereich 1o wieder auf die gewünschte Solltemperatur Tsoll abgesenkt hat bzw. in dem entsprechenden Toleranzbereich gelangt.

In Fig. 2 b) ist der umgekehrte Fall dargestellt, also wenn die Ist-Temperatur Tist im ersten Speicher 1 im Speicherbereich 1o höheren Energieniveaus unter den vorgegebenen Toleranzbereich des Sollwerts der Temperatur Tsoll gesunken ist. Es fehlt also im Speicher 1 Wärmeenergie, die aus dem zweiten Speicher 2 nachgefördert werden muss. Dies erfolgt ganz analog zum Fall in Fig. 2 a), wobei hier die Pumpe 13 angesteuert wird, um Wasser in umgekehrter Richtung aus dem unteren, ersten Speicherbereich 1u des ersten Speichers 1 in den korrespondierenden unteren ersten Speicherbereich 2u des zweiten Speichers 2 zu fördern. Dies geschieht solange, bis das aus dem oberen Speicherbereich 2o des zweiten Speichers 2 in den korrespondierenden oberen Speicherbereich 1o des ersten Speichers 1 geförderte heißere Wasser die Ist-Temperatur Tist des im oberen Speicherbereich 1o des ersten Speichers 1 befindlichen Wassers wieder in den Toleranzbereich der Solltemperatur Tsoll angehoben hat.

Die in Fig. 3 gezeigte Speicheranordnung unterscheidet sich im wesentlichen durch die Art der Verbindung der in Fig. 1 oberen zweiten Rohrleitung 22. Deshalb werden nachfolgend nur die Unterschiede beschrieben. Gleiche Teile werden mit gleichen Bezugszeichen gekennzeichnet.

Die zweite Rohrleitung 22 ist hier an den beiden Speichern 1, 2 zusätzlich in mittleren, dritten Speicherbereichen 1m, 2m mittleren Energieniveaus über Leitungsabzweige 23, 24 angeschlossen, die von je einem Abzweigungspunkt der zweiten Rohrleitung 22 abzweigen. In den Speichern 1, 2 sind benachbart der Anschlüsse für die Leitungsabzweige 23, 24 Einschichtvorrichtungen in Form von Schichtlanzen 25, 26 angeordnet, welche im wesentlichen von den mittleren, dritten Speicherbereichen 1m, 2m in die oberen, zweiten Speicherbereiche 1o, 2o reichen. Anstelle von Schichtlanzen 25, 26 können auch andere, an sich bekannte Einschichtvorrichtungen vorgesehen werden, z. B. Prallplatten, U-förmige Schichtrohre, Einschichtbleche etc.

Um das Wasser höherer Temperatur aus dem oberen, zweiten Speicherbereich 1o, 2o eines Speichers 1, 2 in den dritten Speicherbereich 1m, 2m des anderen Speichers 2, 1 zielgerichtet verschieben zu können, sind in der zweiten Rohrleitung 22 und den Leitungsabzweigen 23, 24 zwischen dem Abzweigungspunkt und den Speichern 1, 2 jeweils als Einwegventile 27-30 ausgebildete Steuermittel angeordnet. Die in der zweiten Rohrleitung 22 mit den oberen, zweiten Speicherbereichen 1o, 2o verbundenen Entlade-Einwegventile 27, 28 ermöglichen lediglich eine Entnahme von Wasser höherer Temperatur aus den zweiten Speicherbereichen 1o, 2o, während die in den Leitungsabzweigen 23, 24 sitzenden Belade-Einwegventile 29, 30 nur eine Zufuhr von Wasser in den dritten Speicherbereich 1m, 2m aus dem zweiten Speicherbereich 1o, 2o des jeweils anderen Speicher 1, 2 erlauben. Es ist aber auch möglich, die Orientierung der Einwegventile an einem oder beiden Speichern zu vertauschen, so dass der Energiefluss in die Speicherbereiche des einen oder der beiden Speicher geändert würde.

Bei Wärmeüberschuss im ersten Speicher 1 wird, wie bereits zu Fig. 1 beschrieben, durch Ansteuern der zweiten Pumpe 14 kaltes Wasser aus dem zweiten Speicher 2 über die erste Rohrleitung 10 in den ersten Speicher 1 umgeladen. Hierdurch wird heißes Wasser aus dem zweiten Speicherbereich 1o des ersten Speichers 1 über das Entlade-Einwegventil 27, die zweite Rohrleitung 22 und das Belade-Einwegventile 30 des zweiten Speichers 2 in den zweiten Speicher 2 umgeladen. Dort wird es mittels der Schichtlanze 26 in die entsprechende Temperaturschicht des zweiten Speichers 2 eingeschichtet. Dies ist grundsätzlich auch ohne Schichtlanze 26 möglich, jedoch wird durch die Schichtlanze 26 ein schnelleres Einschichten des umgeladenen Wassers ermöglicht.

Auch bei dem in Fig. 3 gezeigten Ausführungsbeispiel kann anstelle von zwei Förderpumpen 13, 14 die in Fig. 3 unten gezeigte und oben beschriebene Ein-Pumpen-Lösung 15 mit Umschaltventilen 16, 17 verwendet werden.

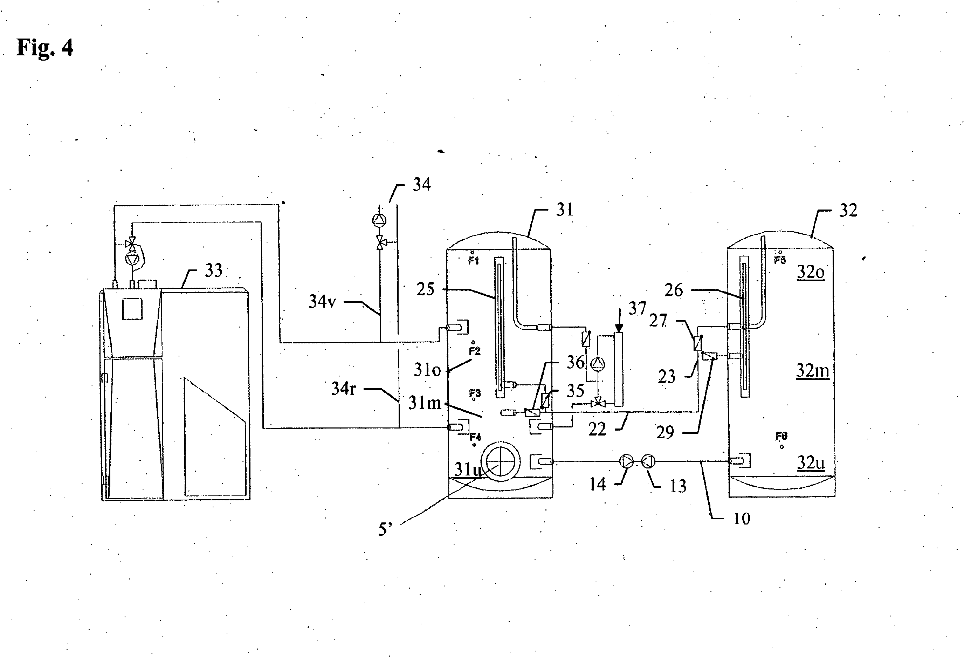

Die in den Fig. 1 und Fig. 3 gezeigte Speicheranordnung aus zwei Speichern 1, 2 kann zum einen als sogenannte Master-Slave-Anlage bzw. Hauptspeicher-Nebenspeicher-Anlage betrieben werden, wie in Fig. 4 gezeigt. Dort wird neben dem in Fig. 4 linken, als Hauptspeicher 31 dienendem Speicher der rechte Speicher als Nebenspeicher 32 zur zusätzlichen Wärmeenergiespeicherung verwendet. Der Hauptspeicher 31 ist in an sich bekannter Weise mit einer als Heizung 33 ausgebildeten Heizquelle verbunden, welche überwiegend den Hauptspeicher 31 mit heißem Wasser versorgt. Ein Heizkreis 34 wird im wesentlichen aus dem Hauptspeicher 31 über eine Vorlaufleitung 34v mit heißem Wasser versorgt, wobei über eine Rücklaufleitung 34r abgekühltes Wasser aus dem Heizkreis 34 wieder in den Hauptspeicher 31 gelangt.

Wie in Fig. 4 erkennbar, entspricht der Aufbau des Hauptspeichers 31 und des Nebenspeichers 32 im wesentlichen dem des ersten bzw. zweiten Speichers 1,2 in Fig. 3. Bei dem Hauptspeicher 31 liegen die Anschlüsse für die zweite Rohrleitung 22 und einen Leitungsabzweig zum ersten Hauptspeicher jedoch tiefer als in der in Fig. 1 und 2 gezeigten Ausführung. Auch ist die Flussrichtung von Einwegventilen 35, 36 zwischen dem Abzweigungspunkt der zweiten Leitung 22 und dem Hauptspeicher 32 vertauscht zu Fig. 3. Dem Hauptspeicher 31 kann also heißes Wasser über das untere Einwegventil 36 entnommen werden, während ihm über das obere Einwegventil 35 heißes Wasser aus dem Nebenspeicher zugeführt werden kann. Das dem Hauptspeicher 31 aus dem Nebenspeicher 32 zugeführte heiße Wasser kann dann über die Schichtlanze 25 in den Hauptspeicher 31 eingeschichtet werden. Hierdurch kann durch den Heizkreis 34 heißes Wasser am Anschluss der Vorlaufleitung 34v des ersten Speichers 31 (bei F2 in Fig. 4) entnommen werden und gleichzeitig Energie aus dem Nebenspeicher 32 über das Belade-Einwegventil 35 in den Hauptspeicher 31 eingeladen werden. Das Wasser im Hauptspeicher 31 kann auch über einen internen Wäremetauscher 5' aufgeheizt werden. Um die Temperaturen in unterschiedlichen Speicherbereichen des Hauptspeichers 31 und des Nebenspeichers 32 messen zu können, sind Temperaturfühler F1 bis F6 vorgesehen, die in an sich bekannter Weise mit der Anlagensteuerung verbunden sind. Die Umladung zwischen dem Hauptspeicher 31 und dem Nebenspeicher 32 erfolgt dann grundsätzlich über die Ansteuerung der Pumpen 13, 14 wie oben beschrieben. Mit der in Fig. 4 gezeigten Speichervorrichtung lässt sich der Umladevorgang aufgrund unterschiedlicher Ausgangssituationen gestalten.

In einem ersten Fall (Speicherfall) weist das Wasser im Hauptspeicher 31 im oberen, zweiten Speicherbereich 31o am Temperaturfühler F2 die für den Heizkreisvorlauf 34v erforderliche Temperatur auf, beispielsweise 60°C. Wird dem Hauptspeicher 31 nun über den Wärmetauscher 5' Wärmeenergie zugeführt, beispielsweise von einer an diesen angeschlossenen Solaranlage, so wird das Wasser im unteren ersten Speicherbereich 31u des Hauptspeichers 31 erhitzt. Steigt die Temperatur im mittleren, dritten Speicherbereich 31m am Temperaturfühler F3 dann über einen vorgegebenen Sollwert in Form eines absoluten Temperatursollwerts, z.B. 55°C, so wird die Pumpe 13 angesteuert, so dass Wasser aus dem Bereich 32u des Nebenspeichers 32 in den ersten, unteren Speicherbereich 31u des Hauptspeichers 31 gefördert und daraufhin Wasser über das Entlade-Einwegventil 36, die Leitung 22 und das Belade-Einwegventil 29 in den mittleren Speicherbereich 32m des Nebenspeichers 32 gefördert wird. Dort wird es mittels der als Schichtlanze 26 ausgebildeten Einschichtvorrichtung in den optimalen Speicherbereich des Nebenspeichers 32 eingeschichtet. Hierdurch kann dem Hauptspeicher 31 zugeführte und dort nicht benötigte, überschüssige Wärmeenergie schnell in den Nebenspeicher 32 umgeladen werden. Vorbedingung für diesen Fall ist, dass das Wasser im unteren, ersten Speicherbereich 32u des Nebenspeichers 32 am Temperaturfühler F6 niedrigere Temperatur aufweist als das Wasser im Speicherbereich 31u des Hauptspeichers 31, also z.B. 45°C gegenüber den ca. 55°C des Hauptspeicher-Speicherbereichs 31u, der Nebenspeicher 32 also noch Wärmeenergie aus dem Hauptspeicher 31 aufnehmen kann.

In einem zweiten Fall (Heizfall) weist das Wasser im Hauptspeicher 31 im oberen, zweiten Speicherbereich 31o am Temperaturfühler F2 nicht die für den Heizkreisvorlauf 34v erforderliche Temperatur auf, also beispielsweise nur 50°C statt gewünschter 60°C. Sinkt diese Temperatur nun weiter unter einen Sollwert in Form eines Temperatursollwerts, z. B. 50°C, so muss das Wasser in diesem Speicherbereich 31o schnell aufgeheizt werden. Hierzu wird die Pumpe 14 angesteuert und dadurch heißes Wasser aus dem zweiten, oberen Speicherbereich 32o höheren Energieniveaus des Nebenspeichers 32 über das Entlade-Einwegventil 27, die Leitung 22 und das Belade-Einwegventil 35 in den oberen Speicherbereich 31o des Hauptspeichers 31 gefördert, so dass anschließend heißes Wasser der geforderten Temperatur aus dem Hauptspeicher 31 entnommen werden kann. Hierdurch kann dem Hauptspeicher 31 schnell benötigte Wärmeenergie aus dem Nebenspeicher 32 zugeführt werden. Vorbedingung für diesen Fall ist, dass das Wasser im oberen, zweiten Speicherbereich 32o des Nebenspeichers 32 am Temperaturfühler F5 höhere Temperatur aufweist als das Wasser im oberen, zweiten Speicherbereich 31o des Hauptspeichers 31 am Temperaturfühler F2, also z.B. 65°C gegenüber den 50°C des Hauptspeicher-Speicherbereichs 31o.

Heißes Wasser kann aus dem in Fig. 4 obersten Bereich (bei F1) des Hauptspeichers 31 auch zu einem Verbraucher in Form eines an sich bekannten Plattenwärmetauschers 37 entnommen werden, wobei das verbrauchte respektive abgekühlte Wasser dem Hauptspeicher 31 dann wieder zugeführt wird.

Alternativ zu der in Fig. 4 gezeigten Anordnung kann die in den Fig. 1 bis Fig. 3 gezeigte Speicheranordnung aus zwei Speichern 1, 2 auch derart betrieben werden, dass beide Speicher 1, 2 gleichberechtigt durch äußere Heizquellen mit heißem Wasser versorgt werden und beide heißes Wasser an andere Elemente eines oder mehrerer Heizkreise abgeben können, z.B. wenn beide Speicher 1, 2 entfernt voneinander in zwei Häusern einer Wohnanlage installiert sind.

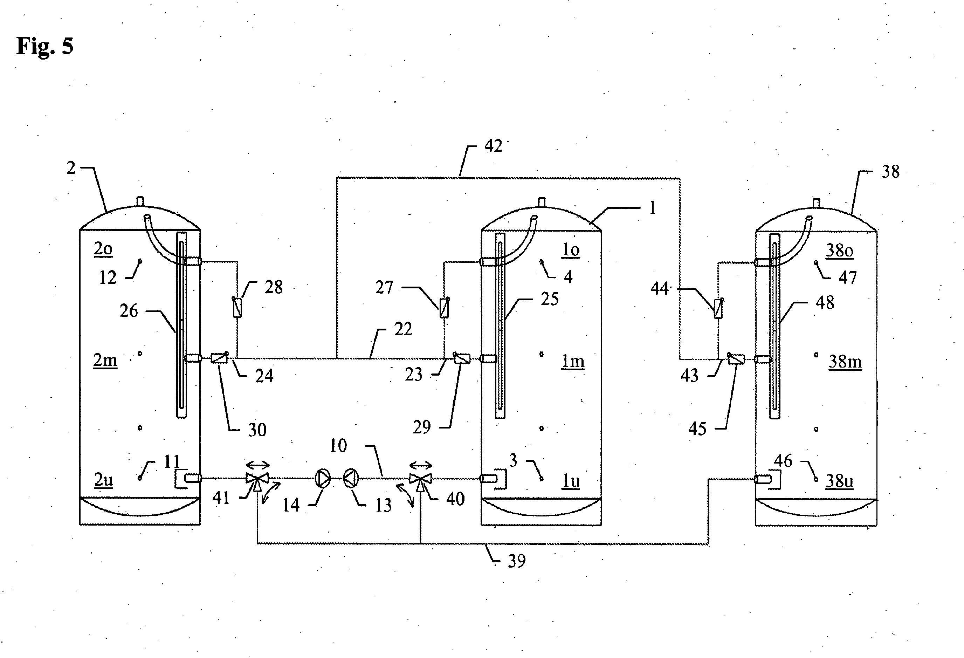

Die in Fig. 5 gezeigte Speicheranordnung unterscheidet sich von der in Fig. 3 gezeigten im wesentlichen durch die Anbindung eines weiteren, dritten Speichers 38 an den ersten Speicher 1 und den zweiten Speicher 2. Deshalb werden nachfolgend nur die Unterschiede beschrieben, während gleiche Teile mit gleichen Bezugszeichen gekennzeichnet werden.

Der dritte Speicher 38 ist über eine dritte Rohrleitung 39 und zwei Umschaltventile 40, 41 an die erste Rohrleitung 10 angeschlossen, wobei die Umschaltventile 40, 41 zwischen den Pumpen 13, 14 und jeweils einem Speicher 1 bzw. 2 angeordnet sind. Eine vierte Rohrleitung 42 ist an die zweite Rohrleitung 22 angeschlossen, so dass über ein Entlade-Einwegventil 44 Wärmeenergie aus einem zweiten, oberen Speicherbereich 38o höheren Wärmeenergieniveaus des dritten Speichers 38 heißes Wasser in den oder die entsprechenden Speicherbereiche 1o, 2o der beiden anderen Speicher 1, 2 umgeladen werden kann. Über einen Leitungsabzweig 43 und ein Belade-Einwegventile 45 des dritten Speichers 38 kann Wärmeenergie in den dritten, mittleren Speicherbereich 38m mit mittlerem Wärmeenergieniveau des dritten Speichers 3 eingebracht werden.

Die Umschaltventile 40, 41 können dabei so geschaltet werden, dass Wasser aus dem ersten Speicherbereich 1u, 2u, 38u eines der drei Speicher 1, 2, 38 in den entsprechenden bzw. korrespondierenden ersten Speicherbereich eines der beiden anderen Speicher gelangt. So kann z.B. durch Öffnen des Umschaltventils 40 in gerader Richtung und des Umschaltventils 41 in die durch den gekrümmten Pfeil gezeigte Richtung und durch Ansteuern der ersten Pumpe 13 Wasser aus dem unteren, ersten Speicherbereich 1u des ersten Speichers 1 über die dritte Rohrleitung 39 in den unteren, ersten Speicherbereich 38u des dritten Speichers 3 gefördert werden. Über das Entlade-Einwegventil 44 des dritten Speichers 38, die vierte Rohrleitung 42, die zweite Rohrleitung 22 und das Belade-Einwegventil 29 des ersten Speichers 1 gelangt dann Wasser höherer Temperatur aus dem oberen, zweiten Speicherbereich 38o des dritten Speichers 38 in den mittleren, dritten Speicherbereich 1m des ersten Speichers 1. Für die anderen möglichen Umladerichtungen müssen die Umschaltventile 40, 41 und die Pumpen 13, 14 dann entsprechend geschaltet bzw. angesteuert werden, was durch die oben beschriebene Steuerung erfolgt.

Die Umschaltventile 40, 41 können aber auch so angesteuert werden, dass Wasser aus dem ersten Speicherbereich eines der Speicher in die entsprechenden Speicherbereiche der anderen Speicher gefördert wird, so dass aus den zweiten Speicherbereichen der anderen Speicher entsprechend heißes Wasser in den einen Speicher umgeladen wird.

Auf die in Fig. 5 gezeigte Art und Weise lassen sich erfindungsgemäße Speicheranordnungen mit weiteren, beliebig vielen Speichern aufbauen und die Wärmeenergie bedarfsgerecht und optimal zwischen den Speichern umschichten.

## Patentansprüche

1. Speicheranordnung zum Speichern von thermischer, in einem fluiden Speichermedium gebundener Energie, mit einem ersten Speicher (1; 31) und mindestens einem zweiten Speicher (2; 32), wobei die Speicher (1, 2; 31, 32) jeweils über Speicherbereiche (1u, 2u; 31u, 32u) in einem tiefen Energieniveau und Speicherbereiche (1o, 2o; 31o, 32o) in einem höheren Energieniveau verfügen, wobei korrespondierende Speicherbereiche zum Umladen des Speichermediums über Leitungen (10, 22) miteinander verbunden sind, **dadurch gekennzeichnet, dass** in wenigstens einer der Leitungen (10) eine in entgegengesetzte Förderrichtungen steuerbare Fördervorrichtung (13, 14; 13', 14', 16', 18'; 15-17) vorgesehen ist, um das Speichermedium von einem Speicherbereich (1u bzw. 1o; 31u bzw. 31o) des ersten Speichers (1) in den korrespondierenden Speicherbereich (2u bzw. 2o; 32u bzw. 32o) des zweiten Speichers (2; 32, 2) und umgekehrt fördern zu können.

2. Speicheranordnung nach Anspruch 1, **dadurch gekennzeichnet, dass** in den Speicherbereichen Temperaturfühler (3, 4, 11, 12; F1-F6; 3, 4, 11, 12, 46, 47) zum temperaturabhängigen Ansteuern der Fördervorrichtung (13, 14; 15-17) vorgesehen sind.

3. Speicheranordnung nach Anspruch 1 oder 2, **dadurch gekennzeichnet, dass** die Fördervorrichtung eine erste Pumpe (13) und- eine in entgegengesetzter Förderrichtung arbeitende zweite Pumpe (14) aufweist, wobei die Pumpen (13, 14) unabhängig voneinander ansteuerbar sind.

4. Speicheranordnung nach Anspruch 1 oder 2, dadurch gekennzeicbnet, dass die Fördervorrichtung eine Pumpe (15) aufweist und in der zur Verbindung der Speicherbereiche (1u, 2u) in einem tiefen Energieniveau vorgesehenen ersten Leitung (10) vor und nach der Pumpe (15) je ein Umschaltventil (16, 17) angeordnet ist, wobei die Umschaltventile (16, 17) jeweils auf der anderen Förderseite der Pumpe (15) mit der ersten Leitung (10) verbunden sind.

5. Speicheranordnung nach einem der vorangehenden Ansprüche, **dadurch gekennzeichnet, dass** Leitungsabzweige (23, 24; 23; 23, 24, 43) die zweite Leitung (22; 22, 42) mit dritten Speicherbereichen (1m, 2m; 31m, 32m; 1m, 2m, 38m) in einem mittleren Energieniveau der-Speicher (1, 2; 31, 32; 1, 2, 38) verbinden, wobei in der zweiten Leitung zwischen den zweiten Speicherbereichen (1o, 2o; 31o, 32o; 1o, 2o, 38o) höheren Energieniveaus und den Leitungsabzweigen sowie in den Leitungsabzweigen Einweg-Steuermittel (27-30; 27, 29, 35, 36; 27-30,44,45) vorgesehen sind, die den Transport des Speichermediums jeweils nur in einer Flussrichtung gestatten.

6. Speicheranordnung nach Anspruch 5, **dadurch gekennzeichnet, dass** die Einweg-Steuermittel nur das Entladen der zweiten Speicherbereiche (1o, 2o) höheren Energieniveaus und das Beladen der dritten Speicherbereiche (1m, 2m) mittleren Energieniveaus zulassen.

7. Speicheranordnung nach Anspruch 5, **dadurch gekennzeichnet, dass** die Einweg-Steuermittel das Entladen des dritten Speicherbereichs (31m) des ersten Speichers (31) und des zweiten Speicherbereichs (32o) des zweiten Speichers (32) sowie das Beladen des zweiten Speicherbereichs (31o) des ersten Speichers (31) und des dritten Speicherbereichs (32m) des zweiten Speichers (32) zulassen.

8. Speicheranordnung nach einem der Ansprüche 5 bis 7, **dadurch gekennzeichnet, dass** in den Speichern (1,2; 31,32; 1,2,38) in der Nähe der Anschlüsse der Leitungsabzweige (23, 24) Einschichtvorrichtungen (25, 26, 48) vorgesehen sind.

9. Speicheranordnung nach einem der vorangehenden Ansprüche, **dadurch gekennzeichnet, dass** an mindestens einem Speicher (1; 31) außerhalb des Speicherinneren eine Wärmequelle (5) vorgesehen ist, welche mit dem Speicherinneren zum Erwärmen eines Teils des im Speicher befindlichen Speichermediums direkt (6) verbundenen ist.

10. Speicheranordnung nach einem der vorangehenden Ansprüche, **dadurch gekennzeichnet, dass** ein oder mehrere weitere Speicher (38) mit dem ersten (1) und dem zweiten Speicher (2) so verbunden sind, dass die Speicherbereiche (1u, 2u, 38u) in einem tieferen Energieniveau untereinander und die Speicherbereiche (1o, 2o, 38o) in einem höheren Energieniveau untereinander verbunden sind, wobei die Fördervorrichtung das Speichermedium vom ersten Speicherbereich (1u, 2u, 38u) eines jeden Speichers (1, 2, 38) in den korrespondierenden Speicherbereich eines oder mehrerer der anderen Speicher fördern kann.

11. Speicheranordnung nach Anspruch 10, **dadurch gekennzeichnet, dass** die Leitungen (22, 42) zur Verbindung der zweiten Speicherbereiche (1o, 2o, 38o) und der dritten Speicherbereiche (1m, 2m, 38m) Einweg-Steuermittel (27-30) aufweisen, die so eingerichtet sind, dass an einem Speicher entweder nur der dritte Speicherbereich entladen und der zweite Speicherbereich beladen oder mur der dritte Speicherbereich beladen und der zweite Speicherbereich entladen werden kann.

12. Verfahren zum Umladen von in einem fluiden Speichermedium gebundener Wärmeenergie, die in einer Speicheranordnung gespeichert ist, wobei Speichermedium aus einem Speicherbereich (1u; 31u) in einem Energieniveau eines ersten Speichers (1; 31) in einen korrespondierenden Speicherbereich (2u; 32u) mindestens eines zweiten Speichers (2; 32) oder in umgekehrter Richtung solange aktiv gefördert wird, bis die Temperatur des Speichermediums in dem oder einem anderen Speicherbereich (1o; 31o) des ersten Speichers (1; 31) einen vorgegebenen Sollwert erreicht.

13. Verfahren nach Anspruch 12, wobei das Speichermedium aus einem Speicherbereich (1u; 31u) in einem tiefen Energieniveau des ersten Speichers (1; 31) in einen korrespondierenden Speicherbereich (2u; 32u) des mindestens zweiten Speichers (2; 32) und/oder aus einem Speicherbereich (2o; 32o) in einem höheren Energieniveau des mindestens zweiten Speichers (2; 32) in einen korrespondierenden Speicherbereich (1o; 31m) des ersten Speichers (1; 31) aktiv gefördert wird, wenn die Temperatur des Speichermediums in einem Speicherbereich (1o; 31o) in einem höheren Energieniveau des ersten Speichers (1; 31) den vorgegebenen Sollwert unterschreitet.

14. Verfahren nach Anspruch 12 oder 13, wobei das Speichermedium aus dem Speicherbereich (2u; 32u) in dem tiefen Energieniveau des mindestens zweiten Speichers (2; 32) in einen korrespondierenden Speicherbereich (1u; 31u) des ersten Speichers (1; 31) und/oder aus dem Speicherbereich (1o; 31m) in dem höheren Energieniveau des ersten Speichers (2; 32) in einen korrespondierenden Speicherbereich (2o; 32m bzw. 32o) des mindestens zweiten Speichers (2; 32) aktiv gefördert wird, wenn die Temperatur des Speichermediums in dem Speicherbereich (1o; 31m) in dem höheren Energieniveau des ersten Speichers (1; 31) den vorgegebenen Sollwert überschreitet.

15. Verfahren nach einem der Ansprüche 12 bis 14, **dadurch gekennzeichnet, dass** der vorgegebene Sollwert in einem vorgegebenen Toleranzbereich liegt.

16. Verfahren nach einem der Ansprüche 12 bis 15, **dadurch gekennzeichnet, dass** der vorgegebene Sollwert ein fest vorgegebener absoluter Temperatursollwert ist.

17. Verfahren nach einem der Ansprüche 12 bis 15, **dadurch gekennzeichnet, dass** der vorgegebene Sollwert aus einem fest vorgegebenen Temperaturdifferenzsollwert und der Temperatur in dem Speicherbereich (2o; 32o) des zweiten Speichers (2; 32), der zu dem oder dem anderen Speicherbereich (1o; 31o) des ersten Speichers (1; 31) korrespondiert, ermittelt wird.

18. Verfahren nach einem der Ansprüche 12-17, **dadurch gekennzeichnet, dass** der vorgegebene Sollwert aus der Temperatur in dem Speicherbereich (2o; 32o) ihn dem höheren Energieniveau des zweiten Speichers (2; 32) und einem fest vorgegebenen Temperaturdifferenzsollwert bestimmt wird.

19. Verfahren nach einem der Ansprüche 12 bis 18, **dadurch gekennzeichnet, dass** Speichermedium aus dem ersten Speicherbereich (1u; 31u; 1u) tiefen Energieniveaus eines der Speicher (1; 31; 1) in den korrespondierenden Speicherbereich (2u; 32u; 2u, 38u) eines und/oder mehrerer weiterer Speicher (2; 32; 2, 38) gefördert wird, wenn die Temperatur des Speichermediums im Speicherbereich (2o; 32o; 2o, 38o) höheren Energieniveaus des und/oder der weiteren Speicher (2; 32; 2, 38) höher ist als die Temperatur des Speichermediums im Speicherbereich (1o 31o; 1o) höheren Energieniveaus des einen Speichers (1; 31; 1).

## Claims

1. Storage arrangement for storage of thermal energy stored in a fluid storage medium, with a first storage unit (1; 31) and at least a second storage unit (2, 32), wherein the storage units (1, 2; 31, 32) in each case have storage regions (1u, 2u, 31u, 32u) with a low energy level and storage regions (1o, 2o; 31o, 32o) with a higher energy level, with correspondmg storage regions connected to one another by means of lines (10, 22) for transferring the storage medium, **characterised in that** a conveying device (13, 14; 13', 14', 16', 18', 15-17) which can be controlled in opposite conveying directions is provided in at least one of the lines (10) in order to be able to convey the storage medium from one storage region (1u or 1o, 31u or 31o) of the first storage unit (1) to the corresponding storage region (2u or 2o, 32u or 32o) of the second storage unit (2, 32, 2) and vice versa

2. Storage arrangement according to claim 1, **characterised in that** temperature sensors (3, 4, 11, 12, F1-F6; 3, 4, 11, 12, 46, 47) are provided in the storage regions for temperature-dependent actuation of the conveying device (13, 14; 15-17)

3. Storage arrangement according to claim 1 or 2, **characterised in that** the conveying device exhibits a first pump (13) and a second pump (14) working in the opposite delivery direction, the pumps (13, 14) being actuatable independently of one another

4. Storage arrangement according to claim 1 or 2, **characterised in that** the conveying device exhibits a pump (15) and in each case a reversing valve (16, 17) is arranged in the first line (10) provided for connection of the storage regions (1u, 2u) with a low energy level before and after the pump (15), the reversing valves (16, 17) in each case being connected to the first line (10) on the other delivery side of the pump (15)

5. Storage arrangement according to one of the preceding claims, **characterised in that** line branches (23, 24, 23, 23, 24, 43) connect the second line (22, 22; 42) to third storage regions (1m, 2m, 31m, 32m, 1m, 2m, 38m) with a middle energy level of the storage units (1, 2, 31, 32, 1, 2, 38), wherein one-way control means (27-30; 27, 29, 35, 36, 27 30, 44, 45) which only allow the storage medium to be transported in one flow direction are provided in the second line between the second storage regions (1o, 2o; 31o, 32o, 1o, 2o, 38o) with a higher energy level and the line branches and in the line branches

6. Storage arrangement according to claim 5, **characterised in that** the one-way control means only allow the unloading of the second storage regions (1o, 2o) with a higher energy level and the loading of the third storage regions (1m, 2m) with a middle energy level

7. Storage arrangement according to claim 5, charaterised in that the one-way control means allow the unloading of the third storage region (31m) of the first storage unit (31) and the second storage region (32o) of the second storage unlit (32) and the loading of the second storage region (31o) of the first storage unit (31) and the third storage region (32m) of the second storage unit (32)

8. Storage arrangement accordmg to one of claims 5 to 7, characterised m that stratifying devices (25, 26, 48) are provided in the storage units (1, 2, 31, 32, 1, 2, 38) in the vicinity of the connections of the line branches (23, 24)

9. Storage arrangement according to one of the preceding claims, **characterised in that** a heat source (5) which is connected directly to the interior of the storage unit to heat a part of the storage medium (6) In the storage unit is provided on at least one storage unit (1, 31) outside the interior of the storage unit

10. Storage arrangement according to one of the preceding claims, **characterised in that** one or more further storage units (38) are connected to the first storage unit (1) and the second storage unit (2) so that the storage regions (1u, 2u, 38u) with a lower energy level are connected to one another and the storage regions (1o, 2o, 38o) with a higher energy level are connected to one another, the conveying device being able to convey the storage medium from the first storage region (1u, 2u, 38u) of each storage unit (1, 2, 38) into the corresponding storage region of one or more of the other storage units.

11. Storage arrangement according to claim 10, **characterised in that** the lines (22, 42) for connection of the second storage regions (1o, 2o, 38o) and the third storage regions (1m, 2m, 38m) exhibit one-way control means (27-30) which are configured so that in a storage unit either only the third storage region can be unloaded and the second storage region loaded or only the third storage region can be loaded and the second storage region unloaded

12. Method of transferring thermal energy stored in a fluid storage medium which is stored in a storage arrangement, whereon storage tedium is actively conveyed from a storage region (1u; 31u) wth one energy level of a first storage umt (1, 31) mto a corresponding storage region (2u; 32u) of at least a second storage unit (2, 32) or m the opposite direction until the temperature of the storage medium m the or another storage regions (I o, 310) of the first storage unit (1, 31) reaches a predetermined set value

13. Method according to claim 12, wherem the storage medium is-actively conveyed from a storage region (1u; 31u) with a low energy level of the first storage unit (1; 31) into a corresponding storage region (2u, 32u) of the at least second storage unit (2, 32) and/or from a storage region (2o, 32o) with a higher energy level of the at least second storage unit (2; 32) into a corresponding storage region (1o; 31m) of the first storage unit (1, 31) when the temperature of the storage medium in a storage region (1o; 31o) with a higher energy level of the first storage unit (1; 31) Is below the predetermined set value

14. Method according to claim 12 or 13, wherein the storage medium is actively conveyed from the storage region (2u, 32u) with the low energy level of the at least second storage unit (2, 32) into a corresponding storage region (1u; 31u) of the first storage unit (1, 31) and/or from the storage region (1o; 31o) with the higher energy level of the first storage unit (2, 32) into a corresponding storage region (2o; 32m or 32o) of the at least second storage unit (2, 32) when the temperature of the storage medium in the storage region (1o; 31m) with the higher energy level of the first storage unit (1, 3 1) exceeds the predetermined set value

15. Method according to one of claims 12 to 14, **characterised in that** the predetermined set value lies in a predetermined tolerance range

16. Method according to one of claims 12 to 15, **characterised In that** the predetermined set value is a fixed predetermined absolute temperature set value

17. Method according to one of claims 12 to 15, **characterised in that** the predetermined set value is determined from a fixed predetermined temperature difference set value and the temperature in the storage region (2o, 32o) of the second storage unit (2; 32) which corresponds to the or the other storage region (1o; 31o) of the first storage unit (1, 31)

18. Method according to one of claims 12 to 17, characterised m that the predetermined set value is determined from the temperature in the storage region (2o, 32o) with the higher energy level of the second storage unit (2; 32) and a fixed predetermined temperature difference set value

19. Method according to one of claims 12 to 18, **characterised In that** storage medium is conveyed from the first storage region (1u; 31u, 1u) with a low energy level of one of the storage units (1, 31, 1) into the corresponding storage region (2u; 32u, 2u, 38u) of one and/or more further storage units (2, 32, 2, 38) when the temperature of the storage medium In the storage region (2o, 32o, 2o, 38o) with a higher energy level of the and/or the further storage units (2, 32; 2, 38) is higher than the temperature of the storage medium in the storage region (1o; 31; 1o) with a higher energy level of the first storage unit (1; 31, 1).

## Revendications

1. Agencement de stockage pour le stockage d'énergie calorifique liée dans un support de stockage fluide, avec un premier accumulateur (1 ; 31) et au moins un second accumulateur (2 ; 32), les accumulateurs (1, 2 ; 31, 32) disposant chacun de zones d'accumulateur (1u, 2u ; 31u, 32u) d'un niveau d'énergie bas et de zones d'accumulateur (1o, 2o ; 31o, 32o) d'un niveau d'énergie supérieur, des zones d'accumulateur correspondantes étant reliées ensemble pour le rechargement du support de stockage par des conduites (10, 22), **caractérisé en ce qu'**un dispositif de transport (13, 14 ; 13', 14', 16', 18' 15-17) pouvant être commandé dans des sens de transport opposés est prévu dans au moins l'une des conduites (10) afin de pouvoir transporter le support de stockage d'une zone d'accumulateur (1u ou 1o; 31u ou 31o) du premier accumulateur (1) dans la zone d'accumulateur correspondante (2u ou 2o ; 32u ou 32o) du second accumulateur (2 ; 32, 2) et inversement.

2. Ensemble de stockage selon la revendication 1, **caractérisé en ce que** des capteurs de température z 4, 11, 12 ; F1-F6 ; 3, 4, 11, 12, 46, 47) sont prévus dans les zones d'accumulateur pour une commande en fonction de la température du dispositif de transport (13, 14 ; 15-17).

3. Ensemble de stockage selon la revendication 1 ou 2, **caractérisé en ce que** le dispositif de transport présente une première pompe (13) et une seconde pompe (14) travaillant dans le sens de transport opposé, les pompes (13, 14) pouvant être commandées indépendamment l'une de l'autre.

4. Ensemble de stockage selon la revendication 1 ou 2, **caractérisé en ce que** le dispositif de transport présente une pompe (15), et une soupape de commutation (16, 17) est disposée dans la première conduite (10) prévue pour la liaison des zones d'accumulateur (1u, 2u) d'un niveau d'énergie bas avant et après la pompe (15), les soupapes de commutation (16, 17) étant respectivement reliées de l'autre côté de transport de la pompe (15) à la première conduite (10).

5. Ensemble de stockage selon l'une quelconque des revendications précédentes, **caractérisé en ce que** des branches de conduite (23, 24 ; 23 ; 23, 24, 43) relient la seconde conduite (22 ; 22, 42) aux troisièmes zones d'accumulateur (1m, 2m ; 31m, 32m ; 1m, 2m, 38m) d'un niveau d'énergie médian des accumulateurs (1, 2 ; 31, 32 ; 1, 2, 38), des moyens de commande à une seule voie (27-30 ; 27, 29, 35, 36 ; 27-30, 44, 45) étant prévus dans la seconde conduite, entre les deuxièmes zones d'accumulateur (1o, 2o ; 31o, 32o ; 1o, 2o, 380) de niveau d'énergie supérieur et les branches de conduite, ainsi que dans les branches de conduite, lesquels moyens de commande permettent le transport du support de stockage respectivement dans un seul sens de flux.

6. Ensemble de stockage selon la revendication 5, **caractérisé en ce que** les moyens de commande à une seule voie ne permettent que le déchargement des deuxièmes zones d'accumulateur (1o, 2o) de niveau d'énergie supérieur et le chargement des troisièmes zones d'accumulateur (1m, 2m) de niveau d'énergie médian.

7. Ensemble de stockage selon la revendication 5, **caractérisé en ce que** les moyens de commande à une seule voie permettent le déchargement de la troisièmes zone d'accumulateur (31m) du premier accumulateur (31) et de la seconde zone d'accumulateur (32o) du second accumulateur (32) ainsi que le chargement de la seconde zone d'accumulateur (31o) du premier accumulateur (31) et de la troisième zone d'accumulateur (32m) du second accumulateur (32).

8. Ensemble de stockage selon l'une quelconque des revendications 5 à 7, **caractérisé en ce que** des dispositifs à une couche (25, 26, 48) sont prévus dans les accumulateurs (1, 2 ; 31, 32 ; 1, 2, 38) à proximité des raccordements des branches de conduite (23, 24).

9. Ensemble de stockage selon l'une quelconque des revendications précédentes, **caractérisé en ce qu'**une source de chaleur (5) est prévue sur au moins un accumulateur (1 ; 31) en dehors de l'intérieur de l'accumulateur, laquelle est reliée directement (6) à l'intérieur de l'accumulateur pour chauffer une partie du support de stockage se trouvant dans l'accumulateur.

10. Ensemble de stockage selon l'une quelconque des revendications précédentes, **caractérisé en ce qu'**un ou plusieurs autres capteurs (38) sont reliés au premier (1) et second accumulateur (2), de manière à ce que les zones d'accumulateur (1u, 2u, 38u) d'un niveau d'énergie plus bas soient reliées entre elles et les zones d'accumulateur (1o, 2o, 38o) d'un niveau d'énergie supérieur soient reliées entre elles, le dispositif de transport pouvant transporter le support de stockage de la première zone d'accumulateur (1u, 2u, 38u) de chaque accumulateur (1, 2, 38) dans la zone d'accumulateur correspondante d'un ou de plusieurs des autres accumulateurs.

11. Ensemble de stockage selon la revendication 10, **caractérisé en ce que** les conduites (22, 42) présentent pour la liaison des deuxièmes zones d'accumulateur (1o, 2o, 38o) et des troisièmes zones d'accumulateur (1m, 2m, 38m) des moyens de commande à une seule voie (27-30) qui sont aménagés de sorte que, sur un accumulateur, seule la troisième zone d'accumulateur puisse être déchargée et la deuxième zone d'accumulateur chargée, ou seule la troisième zone d'accumulateur puisse être chargée et la deuxième zone d'accumulateur déchargée.

12. Procédé de rechargement d'énergie calorifique liée dans un support de stockage fluide, qui est stockée dans un ensemble de stockage, le support de stockage étant activement transporté d'une zone d'accumulateur (1u ; 31u) d'un niveau d'énergie d'un premier accumulateur (1 ; 31) dans une zone d'accumulateur correspondante (2u ; 32u) au moins d'un second accumulateur (2 ; 32) ou dans le sens inverse jusqu'à ce que la température du support de stockage atteigne une valeur de consigne prescrite dans la ou une autre zone d'accumulateur (1o ; 31o) du premier accumulateur (1 ; 31).

13. Procédé selon la revendication 12, le support de stockage étant activement transporté d'une zone d'accumulateur (1u ; 31u) d'un niveau d'énergie bas du premier accumulateur (1 ; 31) dans une zone d'accumulateur correspondante (2u ; 32u) au moins du second accumulateur (2 ; 32) et/ou d'une zone d'accumulateur (2o ; 32o) d'un niveau d'énergie supérieur au moins du second accumulateur (2 ; 32) dans une zone d'accumulateur (1o ; 31m) correspondante du premier accumulateur (1 ; 31) lorsque la température du support de stockage n'atteint pas la valeur de consigne prescrite dans une zone d'accumulateur (1o ; 31o) d'un niveau d'énergie supérieur du premier accumulateur (1 ; 31).

14. Procédé selon la revendication 12 ou 13, le support de stockage étant activement transporté d'une zone d'accumulateur (2u ; 32u) du niveau d'énergie bas au moins du second accumulateur (2 ; 32) dans une zone d'accumulateur correspondante (1u ; 31u) du premier accumulateur (1 ; 31) et/ou de la zone d'accumulateur (1o ; 31m) du niveau d'énergie supérieur du premier accumulateur (2 ; 32) dans une zone d'accumulateur (2o ; 32m ou 32o) correspondante au moins du second accumulateur (2 ; 32) lorsque la température du support de stockage dépasse la valeur de consigne prescrite dans la zone d'accumulateur (1o ; 31m) du niveau d'énergie supérieur du premier accumulateur (1 ; 31).

15. Procédé selon l'une quelconque des revendications 12 à 14, **caractérisé en ce que** la valeur de consigne prescrite se trouve dans une plage de tolérance prescrite.

16. Procédé selon l'une quelconque des revendications 12 à 15, **caractérisé en ce que** la valeur de consigne prescrite est une valeur de consigne de température absolue fixement prescrite.

17. Procédé selon l'une quelconque des revendications 12 à 15, **caractérisé en ce que** la valeur de consigne prescrite composée d'une valeur de consigne différentielle de température fixement prescrite et de la température dans la zone d'accumulateur (2o ; 32o) du second accumulateur (2 ; 32) correspond à la ou à l'autre zone d'accumulateur (1o ; 31o) du premier accumulateur (1 ; 31).

18. Procédé selon l'une quelconque des revendications 12 à 17, **caractérisé en ce que** la valeur de consigne prescrite est déterminée à partir de la température dans la zone d'accumulateur (2o ; 32o) du niveau d'énergie supérieur du second accumulateur (2 ; 32) et d'une valeur de consigne différentielle de température fixement prescrite.

19. Procédé selon l'une quelconque des revendications 12 à 18, **caractérisé en ce que** le support de stockage est transporté de la première zone d'accumulateur (1u ; 31u ; 1u) du niveau d'énergie bas de l'un des accumulateurs (1 ; 31 ; 1) dans la zone d'accumulateur correspondante (2u ; 32u ; 2u, 38u) d'un et/ou de plusieurs autres accumulateurs (2 ; 32 ; 2, 38) lorsque la température du support de stockage dans la zone d'accumulateur (2o ; 32o ; 2o, 38o) de niveau d'énergie supérieur du et/ou des autres accumulateurs (2 ; 32 ; 2, 38) est supérieure à la température du support de stockage dans la zone d'accumulateur (1o ; 31o ; 1o) de niveau d'énergie supérieur d'un accumulateur (1 ; 31 ; 1).
